# EUROPÄISCHE PATENTSCHRIFT

(11) **EP 2 217 347 B1**
(45) Veröffentlichungstag und Bekanntmachung des Hinweises auf die Patenterteilung: **12.03.2014**
(21) Anmeldenummer: 08849274.9
(22) Anmeldetag: 13.11.2008
(51) Int. Cl.: B01D 29/11, B01D 29/23, B01D 35/027, B01D 35/147, B01D 36/00

(54) **ÖLBEHÄLTER MIT ÖLFILTER**
OIL RESERVOIR COMPRISING AN OIL FILTER
RÉSERVOIR D'HUILE AVEC FILTRE À HUILE

(30) Priorität: 15.11.2007 DE 102007054901
(43) Veröffentlichungstag der Anmeldung: 18.08.2010
(73) Patentinhaber: ZF Friedrichshafen AG, 88038 Friedrichshafen (DE); Robert Bosch GmbH, 70469 Stuttgart (DE)
(72) Erfinder: RENNER, Uwe, 49393 Lohne (DE); KARLSTEDT, Rolf, 13245 Saltsju-Buu (SE); LIPP, Christoph, 72070 Tübingen (DE)
(86) Internationale Anmeldenummer: PCT/DE2008/050032
(87) Internationale Veröffentlichungsnummer: WO 2009/062498

(56) Entgegenhaltungen:
- EP-A- 0 342 308
- EP-A- 0 376 443
- WO-A-00/10682
- DE-A1- 2 742 610
- DE-A1- 19 539 759
- US-A- 3 747 761
- US-A1- 2007 017 370

## Beschreibung

Die Erfindung betrifft einen Ölbehälter für ein Hydrauliksystem, welcher aus einem Behältergehäuse und einen in das Behältergehäuse integrierten Ölfilter besteht, wobei das Behältergehäuse vorzugsweise aus Kunststoff besteht.

Ölbehälter dienen beispielsweise in der Kraftfahrzeugtechnik zur Bevorratung des über den Behälter in einem Kreislauf geführten Öls eines hydrostatischen Lüftersystems für die Kühlung des Motors. Nach dem Stand der Technik sind derartige Ölbehälter häufig nicht mit einem Ölfilter ausgestattet. Da jedoch das Ausfiltern von Abrieb oder eventuellen Verunreinigungen aus dem Öl zum Schutz der Komponenten eines Hydrauliksystem unerlässlich ist, muss ein entsprechender Ölfilter im Falle der Verwendung eines Ölbehälters ohne integrierten Ölfilter an anderer Stelle des Systems angeordnet werden.

Es sind jedoch bereits auch Ölbehälter mit einem integrierten, innerhalb des Ölbehälters angeordneten Ölfilter bekannt geworden. Ein derartiger Ölbehälter wird beispielsweise durch die DE 199 25 635 A1 beschrieben. Bei dem in der Schrift beschriebenen Ölbehälter ist der von dem Ölbehälter aufgenommene Ölfilter innerhalb des Ölbehältergehäuses nochmals in einem gesonderten Filtergehäuse gekapselt. Durch den speziellen Aufbau wird bewerkstelligt, dass der Ölfilter unabhängig von dem sonst in dem Ölbehälter gegebenen Füllstand vollständig unterhalb des Ölpegels angeordnet ist, so dass das Öl beim Filtervorgang keine Luft aufnehmen kann, welche zu einer Beeinträchtigung der Funktionsfähigkeit des Kühlsystems und so möglicherweise zu einem Ausfall von Aggregaten des Kraftfahrzeugs führen kann. Zwar macht ein entsprechend der Schrift gestalteter Ölbehälter die gesonderte Anordnung eines Ölfilters in dem Hydrauliksystem außerhalb des Ölbehälters entbehrlich und verhindert zudem wirksam Beeinträchtigungen des Systems durch im Öl enthaltene Luft. jedoch ist die Lösung im Hinblick auf die dazu erforderliche Kapslung des Ölfilters innerhalb des Ölbehälters vergleichsweise aufwändig.

Eine andere Möglichkeit, eine Beeinträchtigung des Kühlsystems durch in dem Öl in Form von Luftblasen enthaltene Luft zu vermeiden, besteht darin, in dem Ölbehälter Leiteinrichtungen für eine gerichtete Ölführung anzuordnen. Mittels solcher Leiteinrichtungen wird der andernfalls verhältnismäßig kurze Weg zwischen dem Öleintrittsstutzen und dem Ölaustritts- beziehungsweise Ölaustrittsstutzen verlängert, so dass eine Abscheidung eventuell in dem Öl enthaltener Luft auf diesem längeren Weg begünstigt wird, wobei die Wirksamkeit dieser Maßnahme darüber hinaus maßgeblich durch die Geometrie der Leiteinrichtungen und der durch sie für das Öl Leitbahn bestimmt wird. Insoweit haben sich für die Abscheidung der Luft insbesondere Zyklonsysteme bewährt, wie sie beispielsweise durch die EP 1 669 119 A1 und die US 6,348,087 B1 beschrieben werden. Mittels derartiger Zyklonsysteme wird das Öl mit den darin eventuell enthaltenen Luftblasen auf einer Kreisbahn in eine Rotationsbewegung versetzt und die Luft hierdurch, infolge der dabei auftretenden Zentrifugalkraft und der unterschiedlichen Dichten von Hydrauliköl und Luft, aus dem Öl abgeschieden. Zwar bezieht sich in diesem Zusammenhang insbesondere die EP 1 669 119 A1 auch darauf, eine entsprechende Zyklonanordnung innerhalb beziehungsweise als Teil eines Ölbehälters auszubilden, jedoch handelt es sich bei dem Ölbehälter nach der Schrift um einen Behälter ohne integrierten Ölfilter. Auch die aus der US-Schrift bekannte Lösung ist offenbar im Falle ihrer Verwendung innerhalb eines Ölbehälters nicht für eine Kombination mit einem Ölfilter vorgesehen.

Die EP 0 342 308 A2 beschreibt eine Trennvorrichtung zum Entfernen von festen und gasförmigen Verunreinigungen aus Fluiden, die ein Filtersystem und eine Wand aufweist, die eine Wirbelstromkammer begrenzt, die eine Mehrzahl von Poren in der Wand ausgebildet hat, damit Fluide, die von gasförmigen Verunreinigungen befreit worden sind, dort hindurchgehen können. Ein Fluideinlassrohr führt Fluide in die Wirbelstromkammer in tangentialer Richtung der Kammer ein, bevor oder nachdem das Filtersystem die Fluide hindurchgelassen hat. Die Wand, die die Wirbelstromkammer begrenzt, hat eine Mehrzahl von Poren zum Durchlassen von Fluiden. Ein Gasentfernungsrohr, das sich in die Wirbelstromkammer erstreckt und im Wesentlichen in der axialen Mitte der Wirbelstromkammer angeordnet ist, weist eine Mehrzahl von kleinen Poren darin ausgebildet auf, damit gasreiche Fluide dort hindurchgehen können. Ein Auslassdurchgang lässt Fluide hindurch, die durch das Filter- und Wirbelstromkammersystem hindurchgegangen sind.

Aus der EP 0 376 443 A2 ist ein Ölfilter bekannt, der zum Einbau in einem Schmiersystem geeignet ist, mit einem Gehäuse, einem entfernbar in dem Gehäuse angeordneten, zylindrischen Filterelement zum Entfernen fester Verunreinigungen, einer an jedem jeweiligen Ende des zylindrischen Filterelements befestigten Stirnplatte und einem innerhalb des durch den Innenumfang des zylindrischen Filterelements begrenzten Raums angeordneten Abscheider zum Entfernen gasförmiger Verunreinigungen, wobei der Abscheider gänzlich innerhalb des durch den Innenumfang des Filterelements zwischen den Stirnplatten begrenzten Raums angeordnet ist. Vorzugsweise ist der Abscheider zum Entfernen gasförmiger Verunreinigungen aus Öl ausgebildet, das durch das Filterelement hindurchgeführt worden ist. Hierzu weist der Abscheider eine Kammer auf, die zur Erzeugung einer Wirbelströmung des dort eingeführten Öls zum Aufteilen des Öls in gasreiches Öl und gasarmes Öl ausgebildet ist.

Aus der WO 00/10682 A1 geht ein Blutfilter zum Entfernen von Luftblasen aus Luftblasen enthaltendem Blut hervor. Der Blutfilter umfasst ein Gehäuse mit einem Filterelement, einem Bluteinlass, einem Blutauslass und einem Luftblasenauslass. Der Bluteinlass ist vorzugsweise in der Nähe einer unteren Oberfläche des Gehäuses angeordnet. Das Gehäuse beinhaltet eine Spiralkammer, die sich zwischen einer inneren Wandung und einer äußeren Wandung des Gehäuses befindet sowie eine zentrale Kammer, die innerhalb der inneren Wandung angeordnet ist. Die Spiralkammer umgibt die zentrale Kammer helixförmig.

Aufgabe der Erfindung ist es, einen Ölbehälter bereitzustellen, welcher über einen Ölfilter verfügt und bei dem trotz eines einfachen Aufbaus vermieden wird, dass mit dem aus dem Behälter angesaugten Öl Luftblasen in den Kreislauf eines Hydrauliksystems gelangen. Die Aufgabe wird durch einen Ölbehälter mit den Merkmalen des Hauptanspruchs gelöst. Vorteilhafte Aus- beziehungsweise Weiterbildungen der Erfindung sind durch die Unteransprüche gegeben.

Der zur Lösung der Aufgabe vorgeschlagene Ölbehälter für ein Hydrauliksystem besteht aus einem Behältergehäuse mit einem Gehäuseunterteil und einem mit dem Gehäuseunterteil stoff- oder formschlüssig verbundenen Behälterdeckel sowie aus einem in dem Behältergehäuse angeordneten Ölfilter. An dem vorzugsweise aus Kunststoff bestehenden Behältergehäuse sind ein Öleintrittsstutzen und mindestens ein Ölaustrittsstutzen zum Anschluss des Ölbehälters an mindestens einen Ölkreislauf beziehungsweise einen Kreislauf eines Hydrauliksystems ausgebildet, wobei das von dem Ölbehälter bevorratete Öl bei dessen Einbeziehung in einen entsprechenden Hydraulikkreislauf mittels einer Ölpumpe aus dem Behälter gesaugt wird. Ferner ist an dem Ölbehälter ein mittels einer Kappe verschließbarer Öleinfüllstutzen vorgesehen.

Erfindungsgemäß ist weiterhin in dem Behältergehäuse mindestens ein Leitelement angeordnet, welches an mindestens einer Innenwand des Behältergehäuses befestigt ist und welches eine kreisförmige Leitbahn für das Öl ausbildet. Durch das Passieren dieser kreisförmigen Leitbahn wird das Öl nach dem Durchströmen des Ölfilters und vor dem Verlassen des Ölbehälters über den oder die Ölaustrittsstutzen zur Abscheidung in ihm gegebenenfalls enthaltener Luft in eine Rotationsbewegung gezwungen. Aufgrund der dadurch auf das Öl mit der gegebenenfalls eingeschlossenen Luft wirkenden Zentrifugalkraft wird die Luft aus dem Öl abgeschieden und kann den Ölbehälter über eine in der Wand des Behälterdeckels oder eine in der Kappe des Öleinfüllshitzens angeordnete Luftaustrittsöffnung verlassen.

Der erfindungsgemäße Ölbehälter weist demnach einen integrierten Ölfilter auf, welcher aber aufgrund der für das Öl in dem Behälter gebildeten Leitbahn und der dadurch gegebenen Möglichkeit, eventuell in dem Öl vorhandene Luft wirksam abzuscheiden, nicht gesondert gekapselt werden muss. Hierdurch wird ein einfacher Aufbau für den Ölbehälter erreicht, welcher dennoch gleichzeitig als Ölfilter fungiert und dabei auch der Forderung Rechnung trägt, das Mitschleppen von Luft in Form von in dem Öl enthaltener Luftblasen in den Hydraulikkreislauf zu unterbinden.

Erfindungsgemäß ist das beziehungsweise sind die Leitelemente um den Ölfilter herum angeordnet. Von dem oder den Leitelementen wird ein den zylinderförmigen Ölfilter umgebender, hohlzylindrischer Raum gebildet. Die Innenwände dieses hohlzylindrischen Raums bilden die sich in diesem Falle in Richtung des mindestens einen Ölaustrittsstutzens öffnende kreisförmige Leitbahn für das Öl aus. Erfindungsgemäß ist die kreisförmige Leitbahn in einem schneckenförmigen Verlauf in mehr als einem vollständigen Umlauf um den Ölfilter herumgeführt. Hierdurch wird eine lange Leitbahn ausgebildet und eine im Hinblick auf das Abscheiden der Luft vorteilhafte starke Verwirbelung des Öls erreicht.

Bei einer besonders vorteilhaften Ausbildungsform des erfindungsgemäßen Ölbehälters ist der Ölfilter mit einem Filtersicherungsventil ausgestattet. Durch dieses Filtersicherungsventil wird der Ölfilter gegen Zerstörung durch gegebenenfalls auftretende Druckspitzen des über den Öleintrittsstutzen aus dem Ölkreislauf in den Ölbehälter eintretenden und dem Ölfilter zugeführten Öls geschützt. Hierzu wird von dem Filtersicherungsventil beim Auftreten entsprechender Druckspitzen ein Bypass geöffnet, über den ein Teil des Öls ohne Passieren des Ölfilters in die Leitbahn und über diese zu dem oder den Ölaustrittsstutzen gelangt. Insoweit ist es zum Schutz des Ölfilters vor Zerstörung hinnehmbar, das in den seltenen Fällen vereinzelt auftretender Druckspitzen ein geringer Teil des Öls ungefiltert in den Kreislauf zurück gelangt.

Entsprechend einer praxisgereichten Ausbildungsform mit einem zylinderförmigen Behältergehäuse sind der Öleintrittsstutzen und der mindestens eine Ölaustrittsstutzen am Behälterboden des Ölbehälters ausgebildet. Dabei mündet der mittig am Behälterboden angeordnete Öleintrittsstutzen unmittelbar in den als Hohlzylinder ausgebildeten, vertikal von der Innenseite des Behälterbodens aufragenden sowie an seiner Oberseite verschlossenen Ölfilter ein. Der oder die Ölaustrittsstutzen sind seitlich neben dem Ölfilter und außerhalb des diesen umgebenden, von dem mindestens einen, am Behälterboden befestigten Leitelement gebildeten hohlzylindrischen Raumes angeordnet. Diese beschriebene Ausbildungsform kann noch dadurch weitergebildet sein, dass oberhalb des hohlzylindrischen Raumes eine Schwallplatte in dem Behältergehäuse angeordnet ist. Durch diese Schwallplatte wird verhindert, dass das in eine Rotationsbewegung gezwungene Öl sich in den äußeren Behälterbereichen nach oben bewegt und in dem Ölfilter ein trichterförmiger Strudel gebildet wird, durch welchen sich die jeweils den Filter passierende Ölmenge verringern würde. Vorzugsweise sind dabei das Gehäuseunterteil und der Gehäusedeckel durch eine Schweißverbindung miteinander verbunden, mittels welcher auch die sich zwischen dem Gehäuseunterteil und dem Gehäusedeckel horizontal erstreckende Schwallplatte an dem Behältergehäuse befestigt ist.

Bei der zuvor beschriebenen Ausbildungsform mit dem vertikal vom Gehäuseboden aufragenden Ölfilter und dem darin einmündenden Öleintrittsstutzen ist ein Filtersicherungsventil entsprechend einer bevorzugten Weiterbildung dadurch realisiert, dass der Ölfilter in dem Ölbehälter federnd gelagert ist. Hierzu ist bei einer entsprechenden Ausbildungsform der Ölfilter über einen an seiner Oberseite angeordneten Stößel, einem an dem Stößel ausgebildeten Absatz und eine auf dem Absatz aufliegende Spiralfeder federnd an einem zur Ausbildung eines Widerlagers in dem Öleinfüllstutzen angeordneten Riegel gelagert. Im Falle eines Überdrucks des in den Filter einströmenden Öls wird der Ölfilter aufgrund seiner federnden Lagerung nach oben gedrückt, so dass ein Teil des Öls unterhalb des Ölfilters ungefiltert, an der Außenseite des in den Ölfilter hineinragenden Öleinlaufstutzens entlang, in den Ölbehälter einströmen kann.

Eine mögliche Ausbildungsform des erfindungsgemäßen Ölbehälters, welche zur Einbeziehung in Hydraulikkreisläufe eines Kraftfahrzeugs ausgebildet ist, weist zwei Ölaustrittsstutzen auf und ist dabei gleichzeitig Teil von zwei unabhängigen Hydraulikkreisläufen. Ein derartiger Ölbehälter könnte in einem Kfz möglicherweise sowohl Teil eines hydrostatischen Lüfterkreislaufs als auch Teil einer Lenkhydraulik sein. Ferner ist an dem erfindungsgemäßen Ölbehälter noch ein zusätzlicher Eintrittsstutzen für den Eintritt von Leckageöl ausgebildet, welches an den Arbeitsaggregaten eines Hydrauliksystems gesammelt und in den Ölbehälter zurückgeführt wird.

Anhand eines Ausführungsbeispiels soll die Erfindung nochmals im Detail dargestellt und erläutert werden. In den zugehörigen Zeichnungen zeigen:
- Fig. 1:: eine mögliche Ausbildungsform des erfindungsgemäßen Ölbehälters in räumlicher Darstellung mit einem axial geführten Schnitt;
- Fig. 2:: den Ölbehälter gemäß Fig. 1 in der Draufsicht und ohne Behälterdeckel.

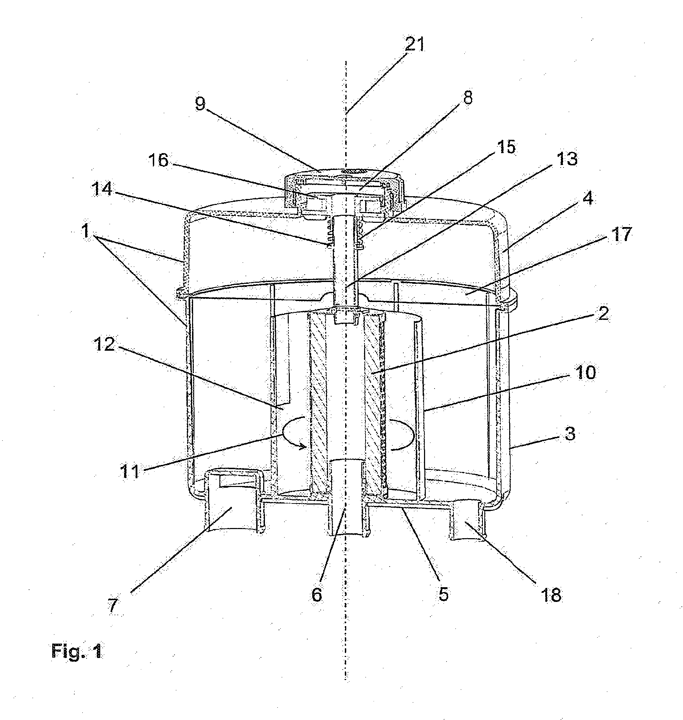

In der Fig. 1 ist eine mögliche Ausbildungsform des erfindungsgemäßen Ölbehälters gezeigt. Die Abbildung zeigt den räumlich dargestellten Ölbehälter in einem Axialschnitt, das heißt in einer Darstellung mit einem längs durch den Behälter beziehungsweise parallel zur Längsachse 21 geführten Schnitt.

Der Ölbehälter besteht im Wesentlichen aus dem Behältergehäuse 1 und dem darin angeordneten Ölfilter 2, wobei das Behältergehäuse 1 von einem Gehäuseunterteil 3 und einem mit dem Gehäuseunterteil 3 durch eine Schweißverbindung verbundenen Gehäusedeckel 4 gebildet ist. Am Boden 5 des Gehäuseunterteils weist der Behälter 3 Stutzen 6, 7, 18 auf, nämlich einen Öleintrittsstutzen 6, einen Ölaustrittsstutzen 7 und einen zusätzlichen Eintrittsstutzen 18 für Leckageöl. Über den Öleintrittsstutzen 6 und den Ölaustrittsstutzen 7 ist der Ölbehälter an ein in der Figur nicht gezeigtes Hydrauliksystem angeschlossen und somit Bestandteil eines Ölkreislaufs. Das aus dem Hydrauliksystem zurückgeführte Hydrauliköl tritt dabei über den Öleintrittstutzen 6 in den Ölbehälter ein und wird nach seiner Filterung von einer (nicht gezeigten Hydraulikpumpe) über den Ölaustrittsstutzen 7 wieder aus dem Ölbehälter heraus in den Kreislauf zurück gesaugt.

Der Öleintrittsstutzen 6 mündet, wie aus der Figur erkennbar, unmittelbar in den auf dem Ende des Öleintrittsstutzens 6 aufsitzenden hohlzylindrischen Ölfilter 2 ein. Mittels des Ölfilters 2, dessen Aufbau aus dem Stand der Technik bekannt ist und der daher hier nicht näher erläuterten werden soll, werden aus dem System stammender Abrieb und Verunreinigungen aus dem Öl herausgefiltert, bevor schließlich das gereinigte Öl den Ölaustrittsstutzen 7 erreicht. Erfindungsgemäß ist um den Ölfilter 2 herum ein Leitelement 10 angeordnet, durch welches aus dem Ölfilter 2 nach der Filterung austretendes Öl auf einer kreisförmigen Leitbahn 11 geführt und damit in eine Rotationsbewegung gezwungen wird. Durch das Leitelement 10 wird verhindert, dass Öl mit darin gegebenenfalls eingeschlossenen Luftblasen auf direktem Wege zum Ölaustrittsstutzen 7 und damit in das nachfolgende Hydrauliksystem gelangt. Bereits dies trägt dazu bei, in dem Öl eventuell vorhandene Luft auf dem längeren Weg zum Ölaustrittsstutzen gegebenenfalls aus dem Öl abscheiden zu können. Durch die spezielle Formgebung des Leitelements 10, welches um den Ölfilter 2 herum einen hohlzylindrischen Raum 12 ausbildet, in den das Öl nach dem Passieren des Ölfilters 2 auf seinem Weg zum Ölaustrittsstutzen 7 zunächst eintritt, wird das Öl, wie bereits ausgeführt, in eine rotatorische Bewegung versetzt. Infolge der dabei auf das Öl und die gegebenenfalls enthaltene Luft einwirkenden Zentrifugalkraft wird die gegenüber dem Öl eine geringere Dichte aufweisende Luft bei der Bewegung des Öl-Luft-Gemisches entlang der durch das Leitelement 10 gebildeten kreisförmigen Leitbahn 11 abgeschieden. Die abgeschiedene Luft kann aus dem Ölbehälter über eine, in der Darstellung nicht erkennbare Luftaustrittsöffnung im Bereich des Öleinfüllstutzens 8 oder der ihn verschließenden Kappe 9 austreten.

Wie ferner aus der Figur ersichtlich ist, ist bei dem gezeigten Ausführungsbeispiel zwischen dem Gehäuseunterteil 3 und dem Behälterdeckel 4 eine sich horizontal erstreckende Schwallplatte 17 angeordnet, welche gemeinsam mit dem Gehäuseunterteil 3 und dem Behälterdeckel 4 am Rand des Ölbehälters verschweißt ist. Durch diese Schwallplatte 17 wird verhindert, dass das in eine Rotationsbewegung versetzte Öl sich im Außenbereich des Ölbehälters nach oben bewegt und in dessen Mitte, das heißt im Bereich des Ölfilters 2, einen abwärts gerichteten Strudel ausbildet. Ein solcher Strudel wäre unerwünscht, weil hierdurch die Kapazität des Ölfilters nicht richtig ausgenutzt würde.

Bei dem dargestellten Ausführungsbeispiel des erfindungsgemäßen Ölbehälters ist der Ölfilter 2 außerdem mit einem Filterschutzventil 13, 14, 15 ausgestattet. Dieses ist dadurch realisiert, dass sich der Ölfilter 2 über den an seiner geschlossenen Oberseite angeordneten Stößel 13 und eine auf einem Absatz 14 dieses Stößels aufliegende Feder 15 an einen in dem Öleinfüllstutzen 8 angeordneten Riegel 16 abstützt. Sofern Öl mit einem zu hohen Druck über den Öleintrittsstutzen 6 in den Ölfilter 2 gelangt, wird dabei der federnd gelagerte Ölfilter 2 gegen die Federkraft der Feder 15 nach oben gedrückt, so dass unterhalb des Ölfilters für das Öl eine Art Bypass freigegeben wird, über den ein Teil des Öls an der Außenseite des Öleintrittsstutzens 6 entlang, unterhalb des Ölfilters 2 in den Ölbehälter einströmen kann. Auf diese Weise wird der Ölfilter 2 vor einer Zerstörung durch temporär auftretende Überdrücke geschützt. Derartige Überdrücke können beispielsweise im Falle der Einbeziehung des Ölbehälters in ein Hydrauliksystem mit einem bei seinem Start zunächst kalten Aggregat in dem dann noch vergleichsweise festen beziehungsweise zähen Öl entstehen. Der zusätzlich an dem Behältergehäuse 1 angeordnete weitere Eintrittsstutzen 18 dient der Rückführung von an Aggregaten des Hydrauliksystems austretendem Leckageöl in den Ölbehälter.

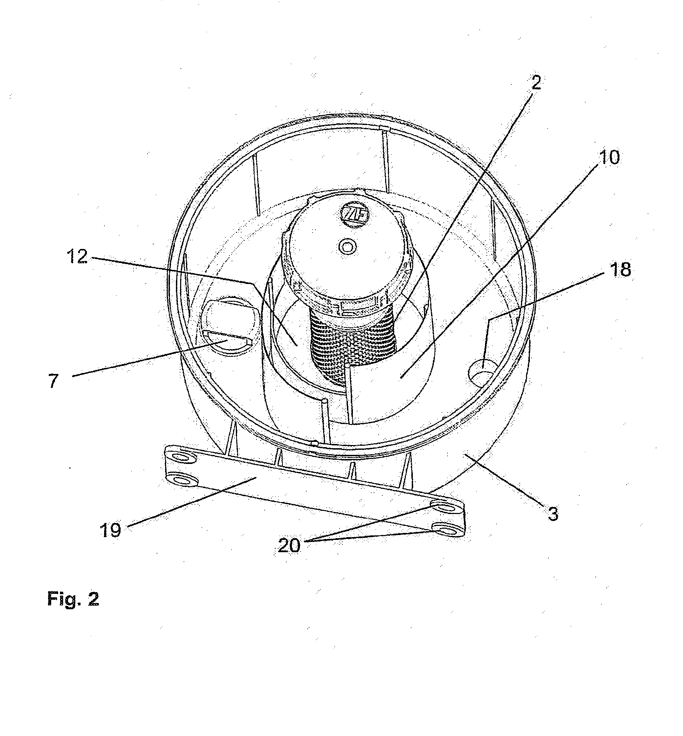

Die Fig. 2 zeigt den Ölbehälter gemäß Fig. 1 nochmals in einer Draufsicht, wobei der Behälterdeckel 4 und die Schwallplatte 17 entfernt wurden. Hier sind besonders gut der durch das Leitelement 10 gebildete hohlzylindrische Raum 12 und der Verlauf der Leitbahn 11 für das Öl zu erkennen. Es ist ersichtlich, dass das Öl in einer Kreisbewegung um den Ölfilter 2 herumgeführt wird, wobei das Öl sich aufgrund des schneckenförmigen Verlaufs der Leitbahn 11 in mehr als einen Umlauf um den Ölfilter 2 bewegt. Die Leitbahn 11 läuft, wie zu erkennen, in der Nähe des Ölaustrittsstutzens 7 aus. Das aufgrund der Zentrifugalkraft von der Luft befreite Öl gelangt schließlich über den Ölaustrittsshitzen 7 wieder in das Hydrauliksystem zurück. An der Außenwand weist der Ölbehälter eine Befestigungsplatte 19 auf, mittels welcher er über darin eingebrachte Bohrungen 20 im Motorraum eines Kraftfahrzeugs befestigt werden kann.

### Bezugszeichenliste

- 1: Behältergehäuse
- 2: Ölfilter
- 3: Gehäuseunterteil
- 4: Gehäusedeckel
- 5: Gehäuseboden
- 6: Öleintrittsstutzen
- 7: Ölaustrittsstutzen
- 8: Öleinfüllstutzen
- 9: Kappe
- 10: Leitelement
- 11: Leitbahn
- 12: hohlzylindrischer Raum
- 13: Stößel
- 14: Absatz
- 15: Feder
- 16: Riegel
- 17: Schwallplatte
- 18: Eintrittsstutzen
- 19: Befestigungsplatte
- 20: Bohrung
- 21: Längsachse

## Patentansprüche

1. Ölbehälter für ein Hydrauliksystem, welcher aus einem Behältergehäuse (1) mit einem Gehäuseunterteil (3) und einem mit dem Gehäuseunterteil (3) stoff- oder formschlüssig verbundenen Behälterdeckel (4) und aus einem in dem Behältergehäuse (1) angeordneten Ölfilter (2) besteht, wobei an dem Behältergehäuse (1) ein Öleintrittsstutzen (6) und mindestens ein Ölaustrittsstutzen (7) zum Anschluss des Ölbehälters an mindestens einen Kreislauf eines Hydrauliksystems sowie ein mittels einer Kappe (9) verschließbarer Öleinfüllstutzen (8) ausgebildet sind, **dadurch gekennzeichnet,**
- **dass** in dem Behältergehäuse (1), befestigt an mindestens einer Innenwand des Behältergehäuses (1), mindestens ein Leitelement (10) angeordnet ist, welches eine kreisförmige Leitbahn (11) für das Öl ausbildet, durch die das Öl, nach dem Passieren des Ölfilters (2) und vor dem Verlassen des Ölbehälters über den oder die Ölaustrittsstutzen (7), zur Abscheidung in ihm enthaltener Luft in eine Rotationsbewegung gezwungen wird, wobei die abgeschiedene Luft den Ölbehälter über eine in der Wand des Behälterdeckels (4) oder eine in der Kappe (9) des Öleinfüllstutzens (8) angeordnete Luftaustrittsöffnung verlässt,
- **dass** das oder die Leitelemente (10) um den Ölfilter (2) herum angeordnet sind,
- **dass** von dem oder den Leitelementen (10) ein den zylinderförmigen Ölfilter (2) umgebender hohlzylindrischer Raum (12) gebildet ist, dessen Innenwände die sich in Richtung des mindestens einen Ölaustrittsstutzens (7) öffnende kreisförmige Leitbahn (11) ausbilden,
- **dass** die kreisförmige Leitbahn (11) in einem schneckenförmigen Verlauf in mehr als einem vollständigen Umlauf um den Ölfilter (2) herumgeführt ist und
- **dass** der Ölbehälter einen Eintrittsstutzen (18) für den Eintritt sich an den Arbeitsaggregaten eines Hydrauliksystems sammelnden und in den Ölbehälter zurückgeführten Leckageöls aufweist.

2. Ölbehälter nach Anspruch 1, **dadurch gekennzeichnet, dass** der Ölfilter (2) mit einem Filtersicherungsventil (13, 14, 15) ausgestattet ist, durch welches der Ölfilter (2) gegen Zerstörung durch Druckspitzen des über den Öleintrittstutzen (6) aus dem Ölkreislauf in den Ölbehälter eintretenden Öls geschützt ist, indem das Filtersicherungsventil (13, 14, 15) beim Auftreten derartiger Druckspitzen einen Bypass öffnet, über den ein Teil des Öls ohne Passieren des Ölfilters (2) über die Leitbahn (11) zu dem oder den Ölaustrittsstutzen (7) gelangt.

3. Ölbehälter nach Anspruch 1 oder 2 mit einem zylinderförmigen Behältergehäuse (1), **dadurch gekennzeichnet, dass** der Öleintrittstutzen (6) und der mindestens eine Ölaustrittsstutzen (7) am Behälterboden (5) des Ölbehälters ausgebildet sind, wobei der mittig am Behälterboden (5) angeordnete Öleintrittstutzen (6) unmittelbar in den als Hohlzylinder ausgebildeten, vertikal von der Innenseite des Behälterbodens (5) aufragenden sowie an seiner Oberseite verschlossenen Ölfilter (2) einmündet und der mindestens eine Ölaustrittsstutzen (7) seitlich neben dem Ölfilter (2) und außerhalb des diesen umgebenden, von dem mindestens einen, am Behälterboden befestigten Leitelement (10) gebildeten hohlzylindrischen Raumes (12) angeordnet ist.

4. Ölbehälter nach einem der vorhergehenden Ansprüche, **dadurch gekennzeichnet, dass** oberhalb des hohlzylindrischen Raumes (12) eine Schwallplatte (17) angeordnet ist.

5. Ölbehälter nach Anspruch 4, **dadurch gekennzeichnet, dass** das Gehäuseunterteil (3) und der Gehäusedeckel (4) durch eine Schweißverbindung mit einander verbunden sind, mittels welcher auch die sich zwischen dem Gehäuseunterteil (3) und dem Gehäusedeckel (4) horizontal erstreckende Schwallplatte (17) an dem Behältergehäuse (1) befestigt ist.

6. Ölbehälter nach einem der Ansprüche 2 bis 5 mit einem Filtersicherungsventil (13, 14, 15), **dadurch gekennzeichnet, dass** das Filtersicherungsventil (13, 24, 15) durch eine federnde Lagerung des ölfilters (2) realisiert ist, indem dieser über einen an seiner Oberseite angeordneten Stößel (13), einem an dem Stößel (13) ausgebildeten Absatz (14) und einer auf dem Absatz aufliegenden Spiralfeder (15) federnd an einem zur Ausbildung eines Widerlagers in dem Öleinfüllstutzen (8) angeordneten Riegel (16) gelagert ist und der Ölfilter (2) im Falle eines Überdrucks des in den Ölfilter (2) einströmenden Öls aufgrund der federnden Lagerung nach oben gedrückt wird, so dass ein Teil des Öls unterhalb des Ölfilters (2) ungefiltert, an der Außenseite des in den Ölfilter (2) hineinragenden Öleinlaufstutzens (6) entlang, in den Ölbehälter einströmen kann.

7. Ölbehälter nach einem der Ansprüche 1 bis 6 zur Einbeziehung in Hydraulikkreisläufe eines Kraftfahrzeugs, **dadurch gekennzeichnet, dass** dieser zwei Ölaustrittsstutzen (7) aufweist und damit Teil zweier getrennter Hydraulikkreisläufe ist.

8. Ölbehälter nach einem der Ansprüche 1 bis 7, **dadurch gekennzeichnet, dass** der Eintrittstutzen (18) in radialer Richtung des Behältergehäuses (1) außerhalb des Leitelements (10) angeordnet ist.

9. Ölbehälter nach einem der vorhergehenden Ansprüche, **dadurch gekennzeichnet, dass** das Leitelement (10) in seiner Umfangsrichtung einen Höhensprung aufweist.

## Claims

1. Oil container for a hydraulic system, which oil container comprises a container housing (1), with a housing bottom part (3) and a container lid (4) which is connected in a material-to-material or positively locking manner to the housing bottom part (3), and an oil filter (2) which is arranged in the container housing (1), an oil inlet stub (6) and at least one oil outlet stub (7), for connecting the oil container to at least one circuit of a hydraulic system, and an oil filling stub (8) which can be closed by means of a cap (9) being formed on the container housing (1), **characterized**
- **in that** at least one guiding element (10) is arranged in the container housing (1), fastened to at least one inner wall of the container housing (1), which guiding element (10) forms a circular pathway (11) for the oil, by way of which circular pathway (11) the oil, after passing the oil filter (2) and before leaving the oil container via the oil outlet stub or stubs (7), is forced into a rotational movement in order to separate air contained in said oil, the separated air leaving the oil container via an air outlet opening which is arranged in the wall of the container lid (4) or an air outlet opening which is arranged in the cap (9) of the oil filling stub (8),
- **in that** the guiding element or guiding elements (10) are arranged around the oil filter (2),
- **in that** a hollow-cylindrical space (12) which surrounds the cylindrical oil filter (2) is formed by the guiding element or guiding elements (10), the inner walls of which hollow-cylindrical space (12) form the circular pathway (11) which opens in the direction of the at least one oil outlet stub (7),
- **in that** the circular pathway (11) is guided around the oil filter (2) in a worm-shaped course in more than one complete circuit, and
- **in that** the oil container has an inlet stub (18) for the inlet of leakage oil which collects at the working assemblies of a hydraulic system and is returned into the oil container.

2. Oil container according to Claim 1, **characterized in that** the oil filter (2) is equipped with a filter safety valve (13, 14, 15), by way of which the oil filter (2) is protected against destruction as a result of pressure spikes of the oil which enters the oil container from the oil circuit via the oil inlet stub (6), by the filter safety valve (13, 14, 15) opening a bypass if pressure spikes of this type occur, via which bypass part of the oil flows, without passing the oil filter (2), via the pathway (11) to the oil outlet stub or stubs (7).

3. Oil container according to Claim 1 or 2 having a cylindrical container housing (1), **characterized in that** the oil inlet stub (6) and the at least one oil outlet stub (7) are formed on the container bottom (5) of the oil container, the oil inlet stub (6) which is arranged centrally on the container bottom (5) opening directly into the oil filter (2) which is formed as a hollow cylinder, protrudes vertically from the inner side of the container bottom (5) and is closed on its top side, and the at least one oil outlet stub (7) being arranged laterally next to the oil filter (2) and outside the hollow-cylindrical space (12) which surrounds it and is formed by the at least one guiding element (10) which is fastened on the container bottom.

4. Oil container according to one of the preceding claims, **characterized in that** a splash plate (17) is arranged above the hollow-cylindrical space (12).

5. Oil container according to Claim 4, **characterized in that** the housing bottom part (3) and the housing lid (4) are connected to one another by way of a welded joint, by means of which the splash plate (17) which extends horizontally between the housing bottom part (3) and the housing lid (4) is also fastened to the container housing (1).

6. Oil container according to one of Claims 2 to 5 having a filter safety valve (13, 14, 15), **characterized in that** the filter safety valve (13, 14, 15) is realized by way of a sprung mounting of the oil filter (2), by the said oil filter (2) being mounted in a sprung manner, via a plunger (13) which is arranged on its top side, a shoulder (14) which is formed on the plunger (13), and a helical spring (15) which rests on the shoulder, on a bar (16) which is arranged in the oil filling stub (8) in order to form an abutment, and by the oil filter (2) being pressed upwards on account of the sprung mounting in the case of an excess pressure of the oil which flows into the oil filter (2), with the result that part of the oil below the oil filter (2) can flow unfiltered into the oil container, along the outer side of the oil inlet stub (6) which protrudes into the oil filter (2).

7. Oil container according to one of Claims 1 to 6 for incorporation into hydraulic circuits of a motor vehicle, **characterized in that** it has two oil outlet stubs (7) and is therefore part of two separate hydraulic circuits.

8. Oil container according to one of Claims 1 to 7, **characterized in that** the inlet stub (18) is arranged outside the guiding element (10) in the radial direction of the container housing (1).

9. Oil container according to one of the preceding claims, **characterized in that** the guiding element (10) has a vertical step in its circumferential direction.

## Revendications

1. Réservoir d'huile pour un système hydraulique, qui se compose d'une enceinte de réservoir (1) avec une partie inférieure d'enceinte (3) et un couvercle de réservoir (4) assemblé par complémentarité de matière ou de forme à la partie inférieure d'enceinte (3) et d'un filtre à huile (2) disposé dans l'enceinte de réservoir (1), dans lequel sont formés sur l'enceinte de réservoir (1) un embout d'entrée d'huile (6) et au moins un embout de sortie d'huile (7) pour le raccordement du réservoir d'huile à au moins un circuit d'un système hydraulique ainsi qu'un embout de remplissage d'huile (8) pouvant être fermé au moyen d'un capuchon (9), **caractérisé en ce que**
- au moins un élément de guidage (10), fixé à au moins une paroi intérieure de l'enceinte de réservoir (1), est disposé dans l'enceinte de réservoir (1), lequel forme un chemin de guidage circulaire (11) pour l'huile, par lequel l'huile, après avoir traversé le filtre à huile (2) et avant de quitter le réservoir d'huile par le ou les embout(s) de sortie d'huile (7), est animée d'un mouvement de rotation forcé pour la séparation de l'air qu'elle contient, dans lequel l'air séparé quitte le réservoir d'huile par un orifice de sortie d'air disposé dans la paroi du couvercle de réservoir (4) ou dans le capuchon (9) de l'embout de remplissage d'huile (8),
- le ou les éléments de guidage (10) est/sont disposé(s) autour du filtre à huile (2),
- une chambre cylindrique creuse (12) entourant le filtre à huile cylindrique (2) est formée par le ou les élément(s) de guidage (10), et dont les parois intérieures forment le chemin de guidage circulaire (11) s'ouvrant en direction dudit au moins un embout de sortie d'huile (7),
- le chemin de guidage circulaire (11) est mené autour du filtre à huile (2) en une trajectoire hélicoïdale en plus d'une spire complète, et
- le réservoir d'huile présente un embout d'entrée (18) pour l'entrée de l'huile de fuite s'accumulant dans les ensembles de travail d'un système hydraulique et renvoyée dans le réservoir d'huile.

2. Réservoir d'huile selon la revendication 1, **caractérisé en ce que** le filtre à huile (2) est muni d'une soupape de sécurité de filtre (13, 14, 15), par laquelle le filtre à huile (2) est protégé contre la destruction par des pointes de pression de l'huile entrant dans le réservoir d'huile par l'embout d'entrée d'huile (6) en provenance du circuit d'huile, par le fait que, lors de l'apparition de telles pointes de pression, la soupape de sécurité de filtre (13, 14, 15) ouvre une dérivation par laquelle une partie de l'huile arrive, sans traverser le filtre à huile (2), à l'embout ou aux embouts de sortie d'huile (7) via le chemin de guidage (11).

3. Réservoir d'huile selon la revendication 1 ou 2 avec une enceinte de réservoir cylindrique (1), **caractérisé en ce que** l'embout d'entrée d'huile (6) et ledit au moins un embout de sortie d'huile (7) sont formés dans le fond de réservoir (5) du réservoir d'huile, dans lequel l'embout d'entrée d'huile (6) disposé au centre du fond de réservoir (5) débouche directement dans le filtre à huile (2) réalisé en forme de cylindre creux, saillant verticalement à partir du côté intérieur du fond de réservoir (5) et fermé à son côté supérieur et ledit au moins un embout de sortie d'huile (7) est disposé latéralement à côté du filtre à huile (2) et à l'extérieur de l'espace cylindrique creux (12) entourant celui-ci et formé par ledit au moins un élément de guidage (10) fixé au fond de réservoir.

4. Réservoir d'huile selon l'une quelconque des revendications précédentes, **caractérisé en ce qu'**une plaque anti-projections (17) est disposée au-dessus de l'espace cylindrique creux (12).

5. Réservoir d'huile selon la revendication 4, **caractérisé en ce que** la partie inférieure d'enceinte (3) et le couvercle d'enceinte (4) sont assemblés l'un à l'autre par un assemblage soudé, au moyen duquel la plaque anti-projections (17) s'étendant horizontalement entre la partie inférieure d'enceinte (3) et le couvercle d'enceinte (4) est également fixée à l'enceinte de réservoir (1).

6. Réservoir d'huile selon l'une quelconque des revendications 2 à 5 avec une soupape de sécurité de filtre (13, 14, 15), **caractérisé en ce que** la soupape de sécurité de filtre (13, 14, 15) est réalisée par un appui à ressort du filtre à huile (2), par le fait que celui-ci est monté en appui à ressort sur un verrou (16) disposé dans l'embout de remplissage d'huile (8) pour la formation d'un contre-appui, par l'intermédiaire d'un poussoir (13) disposé sur son côté supérieur, d'un épaulement (14) formé sur le poussoir (13) et d'un ressort hélicoïdal (15) prenant appui sur l'épaulement, et que, dans le cas d'une surpression de l'huile entrant dans le filtre à huile (2), le filtre à huile (2) est repoussé vers le haut à cause de l'appui à ressort, de telle manière qu'une partie de l'huile présente en dessous du filtre à huile (2) puisse s'écouler dans le réservoir d'huile sans être filtrée, le long du côté extérieur de l'embout de sortie d'huile (6) pénétrant dans le filtre à huile (2).

7. Réservoir d'huile selon l'une quelconque des revendications 1 à 6 à intégrer dans des circuits hydrauliques d'un véhicule automobile, **caractérisé en ce que** celui-ci présente deux embouts de sortie d'huile (7) et fait ainsi partie de deux circuits hydrauliques séparés.

8. Réservoir d'huile selon l'une quelconque des revendications 1 à 7, **caractérisé en ce que** l'embout d'entrée d'huile (18) est disposé en direction radiale de l'enceinte de réservoir (1) à l'extérieur de l'élément de guidage (10).

9. Réservoir d'huile selon l'une quelconque des revendications précédentes, **caractérisé en ce que** l'élément de guidage (10) présente un saut de hauteur dans sa direction périphérique.
